# EUROPÄISCHE PATENTANMELDUNG

(11) **EP 3 945 480 A1**
(43) Veröffentlichungstag der Anmeldung: **02.02.2022**
(21) Anmeldenummer: 20187866.7
(22) Anmeldetag: 27.07.2020
(51) Int. Cl.: G06Q 10/08, G16Y 20/10, G16Y 30/10

(54) **SYSTEM, GERÄT UND VERFAHREN ZUR AUSFÜHRUNG VON PROGRAMMBEFEHLEN FÜR EINE RESSOURCE**

(71) Anmelder: Siemens Aktiengesellschaft, 80333 München (DE)
(72) Erfinder: Holzner, Thomas, 13465 Berlin (DE); Hotsch, Sönke, 10249 Berlin (DE); Sokol, Joachim, 82008 Unterhaching (DE); Weinhold, Maximilian, 10249 Berlin (DE); Ziener, Philipp, 10787 Berlin (DE)

(57) **Zusammenfassung**

Die Erfindung ist z. B. dahingehend vorteilhaft, um in einer Supply-Chain deren Ressourcen (z. B. Geräte, Waren, Werkzeuge, Rohstoffe wie Stahl, Chemikalien, Öl) möglichst lückenlos zu überwachen und/oder für deren Handhabung, Steuerung und/oder Verarbeitung Vorgaben festzulegen, wobei die Verarbeitung z. B. beim Einhalten der Vorgaben oder beim Verletzten der Vorgaben automatisiert durch das System gesteuert wird.

## Beschreibung

Die Erfindung bezieht sich auf Verfahren, Vorrichtungen und ein System zum sicherheitsgeschützten Bereitstellen von Datensätzen, wobei die Datensätze beispielsweise Sensordaten umfassen.

Eine immer stärkere Vernetzung von Smart-Geräten (z. B. Mobiltelefonen, Smartwatches) oder Fertigungsanlagen führt dazu, dass mehr und mehr Sensordaten von diesen Smart-Geräten und Fertigungsanlagen erfasst werden. Insbesondere soll mit diesen Daten beispielsweise eine Fertigung oder auch der Transport von Objekten (z. B. Werkstücken, Nahrungsmittel usw.) überwacht werden.

Nachfolgend werden Aspekte der Erfindung erläutert.

Die Technologie von Blockketten (engl. Blockchains) bzw. "Distributed Ledgers" ist aktuell eine intensiv diskutierte Technologie, die insbesondere als verteiltes Datenbanksystem oder als Netzwerkapplikation realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem Aspekt betrifft die Erfindung ein System zum Steuern und/oder Verarbeiten einer Ressource aufweisend:
- ein Registrierungsmodul, wobei
   - das Registrierungsmodul zum Registrieren einer Ressource als ein Objekt eingerichtet ist,
   - beim Registrieren eine Objektdatenstruktur für das Objekt ermittelt wird,
   - die Objektdatenstruktur der Ressource eindeutig zugeordnet ist;
- ein Speichermodul, wobei
   - das Speichermodul zum Speichern der Objektdatenstruktur eingerichtet ist;
- ein Steuerungsmodul, wobei
   - das Steuerungsmodul zum Steuern und/oder Verarbeiten der Ressource anhand der Objektdatenstruktur des Objektes eingerichtet ist.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen. "Computerimplementiert" bedeutet beispielsweise, dass das Verfahren bzw. dessen Verfahrensschritte durch einen Prozessor oder durch mehrere Prozessoren ausgeführt wird.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", "aufweisen" und dergleichen, insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) oder einer Netzwerk-Applikation verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems (oder der Netzwerk-Applikation) oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transaktionen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems (oder der Netzwerk-Applikation) prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks, für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems (oder der Netzwerk-Applikation) den vorhergehenden Datenblock des verteilten Datenbanksystems (oder der Netzwerk-Applikation) angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems oder der Netzwerk-Applikation) verwendet werden, um einen neuen Datenblock mit einem (vorhandenen) Datenblock des verteilten Datenbanksystems (oder der Netzwerk-Applikation) zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transaktion eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems oder der Netzwerkapplikation sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transaktion noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems (oder der Netzwerkapplikation) bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems (oder der Netzwerkapplikation) möglichst gering zu halten.

Unter "sicherheitsgeschützt" oder "kryptographisch geschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems (oder der Netzwerkapplikation) für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems (oder der Netzwerkapplikation) verweisen bzw. diese referenzieren [1][4][5].

Unter "Einfügen in das verteilte Datenbanksystem (oder in eine Netzwerkapplikation)" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems (oder einer Netzwerkapplikation) übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems (oder der Netzwerkapplikation) verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems (oder der Netzwerkapplikation) verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktion und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden.

Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen", "Speichern der Objektdatenstruktur (z. B. von dem Speichermodul)" und dergleichen ein direktes Speichern oder indirektes Speichern zu verstehen. Dabei kann beispielsweise eine Objektdatenstruktur eine Nachricht oder eine Transaktion sein oder eine Nachricht oder eine Transaktion umfasst die Objektdatenstruktur.

Unter einem direkten Speichern kann dabei beispielsweise verstanden werden, dass der entsprechende Datenblock (des verteilten Datenbanksystems/der Netzwerkapplikation) oder die entsprechende Transaktion/ Objektdatenstruktur (des verteilten Datenbanksystems/der Netzwerkapplikation) die jeweiligen Daten umfasst.

Unter einem indirekten Speichern kann dabei beispielsweise verstanden werden, dass der entsprechende Datenblock oder die entsprechende Transaktion oder die entsprechende Datenstruktur beispielsweise eine Prüfsumme und/oder optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem (oder in eine Netzwerkapplikation)" erläutert ist.

Unter einem "Programmcode" (z. B. ein Smart-Contract oder auch Chain-Code genannt) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem (oder durch die Netzwerkapplikation) ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems (oder der Netzwerkapplikation) ausgeführt [4][5]. Dabei wird beispielsweise eine virtuelle Maschine durch die Infrastruktur des verteilten Datenbanksystems (oder der Netzwerkapplikation) realisiert.

Unter einem "Smart Contract" (oder auch Chain-Code genannt) kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) oder einer Netzwerkapplikation gespeichert, beispielsweise in einem Datenblock des verteilten Datenbanksystems oder der Netzwerkapplikation. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einer "Netzwerkapplikation" kann beispielsweise ein verteiltes Datenbanksystem oder eine verteilte Kommunikationssystem handeln.

Unter einer "Netzwerk-Applikation", kann im Zusammenhang mit der Erfindung beispielsweise eine dezentral verteilte Datenbank, ein verteiltes Datenbanksystem, eine verteilte Datenbank, eine Peer-to-Peer Applikation, ein verteiltes Speicherverwaltungssystem, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Beispielsweise kann eine Netzwerk-Applikation (oder auch als Netzwerkapplikation bezeichnet) ein verteiltes Datenbanksystem sein, das z. B. mittels einer Blockkette (z. B. Hyperledger) oder einem distributed ledger realisiert ist. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder einer Kombination aus den genannten Implementierungsvarianten [6][7] umgesetzt ist. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" oder einer "Netzwerk-Applikation" kann beispielsweise auch ein verteiltes Datenbanksystem oder eine Netzwerk-Applikation verstanden werden, von dem/der zumindest ein Teil (oder alle Teile) seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen über gerichtete Kanten miteinander verbunden. Azyklisch bedeutet dabei insbesondere, dass es keine gerichteten Schleifen im Graphen gibt.

Bei dem verteilten Datenbanksystem oder bei der Netzwerk-Applikation kann es sich beispielsweise um ein öffentliches verteiltes Datenbanksystem oder eine ein öffentliche Netzwerk-Applikation (z. B. eine öffentliche Blockkette) oder ein geschlossenes (oder privates) verteiltes Datenbanksystem oder eine geschlossene Netzwerk-Applikation (z. B. eine private Blockkette) handeln.

Handelt es sich beispielsweise um ein öffentliches verteiltes Datenbanksystem oder eine öffentliche Netzwerk-Applikation, bedeutet dies, dass neue Knoten und/oder Geräte ohne Berechtigungsnachweise oder ohne Authentifizierung oder ohne Anmeldeinformationen oder ohne Credentials dem verteilten Datenbanksystem oder der Netzwerk-Applikation beitreten können bzw. von diesem akzeptiert werden. Insbesondere können in einem solchen Fall die Betreiber der Knoten und/oder Geräte anonym bleiben.

Handelt es sich bei dem verteilten Datenbanksystem oder der Netzwerk-Applikation beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem oder der Netzwerk-Applikation beitreten zu können bzw. von diesem akzeptiert zu werden.

Bei einem verteilten Datenbanksystem oder bei der Netzwerk-Applikation kann es sich beispielsweise auch um ein verteiltes Kommunikationssystem zum Datenaustausch handeln. Dies kann beispielsweise ein Netzwerk oder ein Peer-to-Peer Netzwerk sein.

Bei einem/dem verteilten Datenbanksystem kann es sich beispielsweise auch um ein dezentrales verteiltes Datenbanksystem und/oder ein dezentrales verteiltes Kommunikationssystem handeln.

Bei einer "Netzwerk-Applikation" kann es sich beispielsweise auch um eine Netzwerk-Applikationsinfrastruktur handeln oder die Netzwerk-Applikation umfasst eine entsprechende Netzwerk-Applikationsinfrastruktur. Diese Infrastruktur kann beispielsweise Knoten und/oder Kommunikationsnetze und/oder Datenschnittstelle und/oder weitere Komponenten umfassen, um die Netzwerk-Applikation zu realisieren oder auszuführen. Bei der Netzwerk-Applikation kann es sich z. B. um eine verteilte Netzwerk-Applikation (z. B. eine verteilte Peer-to-Peer Applikation oder ein verteiltes Datenbanksystem) handeln, die beispielsweise auf mehreren Knoten der Netzwerk-Applikationsinfrastruktur ausgeführt wird.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) oder einer Netzwerk-Applikation verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen-oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems (oder einer Netzwerk-applikation)" kann im Zusammenhang mit der Erfindung beispielsweise der Datenblock des verteilten Datenbanksystems (oder der Netzwerkapplikation) verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems (oder der Netzwerkapplikation) verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems oder einer Netzwerk-Applikation" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen einer Netzwerk-Applikation oder eines verteilten Datenbanksystems bzw. deren Datenblöcke ausführen oder neue Datenblöcke mit neuen Transaktionen in das verteilte Datenbanksystem (oder in die Netzwerk-Applikation) mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems (oder der Netzwerk-Applikation) sind. Dabei können die Geräte beispielsweise Feldgeräte sein oder Geräte im Internet der Dinge sein, die insbesondere auch ein Knoten des verteilten Datenbanksystems (oder der Netzwerk-Applikation) sind. Knoten können beispielsweise auch zumindest einen Prozessor umfassen, um z. B. ihre computerimplementierte Funktionalität auszuführen. Ein Knoten kann beispielsweise als Gerät oder ausgebildet sein oder ein Knoten kann beispielsweise ein Gerät umfassen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse), elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst) oder eine Kombination der genannten Möglichkeiten. Das Sicherheitsmodul kann dabei beispielsweise kryptographische Schlüssel oder ein Geheimnis (z. B. eine Zeichenfolge) umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein IoT-Gerät, ein Gerät oder ein Server verstanden werden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage direkt mit dem verteilten Datenbanksystem (direkt) oder der Netzwerk-Applikation zu kommunizieren.

Ein Gerät kann beispielsweise auch ein Knoten einer Netzwerk-applikation oder eines verteilten Datenbanksystems sein.

Unter "eindeutigen Merkmale" (oder z. B. nur als Merkmale bezeichnet oder als individuelle Merkmale bezeichnet) können im Zusammenhang mit der Erfindung beispielsweise Merkmale (z. B. in Form von Daten) verstanden werden, die durch einen Sensor von oder über die Ressource erfasst werden können und beispielsweise einer physikalischen Größe entsprechen können (z. B. Wellenlänge des Lichtes). Die individuellen Merkmale sind dabei beispielsweise eindeutig, d. h. z. B. dass diese Merkmale bzw. Daten einer einmaligen Kombination aus einen Folge von Einsen und Nullen (digitaler Fingerabdruck oder eine Art Unique Identifier) in Form von binärcodierten Daten entspricht, die z. B. einer entsprechenden Ressource bzw. dem Objekt fest zugeordnet werden können. Bei den eindeutigen Merkmalen kann es sich beispielsweise um Oberflächenmerkmale (z. B. Kratzer, Oberflächenunebenheiten) der Ressource handeln. Alternativ oder zusätzlich kann es sich bei den eindeutigen Merkmalen z. B. um spektroskopische Daten (die z. B. auch als spektrale Daten bezeichnet werden können) über die Ressource handeln (z. B. gemessene Spektren, hyperspektrale Bilder). Beispielsweise kann es sich bei der Ressource um Edelsteine, Rohöl oder Lebensmittel handeln, von denen z. B. mittels eines Erfassungsgerätes in Form eines Spektroskopes ein Spektrum für die Ressource oder eine vorgegebene Position (z. B. eine vorgegebene Fläche und/oder Position) des Objektes erfasst wird. Insofern kann es sich bei den eindeutigen Merkmalen beispielsweise um spektroskopische eindeutige Merkmale handeln.

Bei den eindeutigen Merkmalen kann es sich beispielsweise auch um individuelle Merkmale eines Rauschsignals handeln, das z. B. durch das Erfassungsgerät (z. B. ein Oszilloskop) erfasst wird. Handelt es sich bei der Ressource beispielsweise um ein elektronisches Bauteil, so kann beispielsweise über eine Schnittstelle der Ressource (z. B. ein Kommunikationsmodul) ein Rauschsignal oder ein Signal erfasst werden. Insbesondere können beim Erfassen und/oder Auswerten und/oder Vergleichen und/oder Prüfen und/oder Verarbeiten der individuellen Merkmale Toleranzwerte berücksichtigt werden, um z. B. Messtoleranzen oder Messungenauigkeiten, z. B. des Erfassungsgerätes, auszugleichen.

Unter einer "Datenstruktur (z. B. die Objektdatenstruktur" kann im Zusammenhang mit der Erfindung beispielsweise eine Nachricht oder eine Transaktion verstanden werden. Alternativ umfasst beispielsweise eine Nachricht oder eine Transaktion eine entsprechende Datenstruktur. Beispielsweise umfassen ggf. die Datenstruktur, die Nachricht oder die Transaktion eine entsprechende kryptographische Prüfsumme für die Datenstruktur.

Unter einem "kryptographischer Schlüssel" kann im Zusammenhang mit der Erfindung beispielsweise ein symmetrischer kryptographischer Schlüssel oder ein privater Schlüssel eines asymmetrischen kryptographischen Schlüsselpaares oder ein öffentlicher Schlüssel eines asymmetrischen kryptographischen Schlüsselpaares verstanden werden.

Beispielsweise kann eine von der Erfindung genutzte (Objekt)Datenstruktur noch weitere Daten umfassen, wie beispielsweise Steuerbefehle, um z. B. einen Weitertransport oder eine Weiterverarbeitung der Ressource zu steuern, wenn z. B. mit der Erfindung festgestellt wurde, dass die Ressource authentisch ist bzw. der Ressource entspricht, für das z. B. bereits eine entsprechende Datenstruktur (z. B. mit einer Prüfsumme) z. B. in der Netzwerkapplikation gespeichert wurde.

Die Erfindung ist z. B. dahingehend vorteilhaft, um in einer Supply-Chain deren Ressourcen (z. B. Geräte, Waren, Werkzeuge, Rohstoffe wie Stahl, Chemikalien, Öl) möglichst lückenlos zu überwachen und/oder für deren Handhabung, Steuerung und/oder Verarbeitung Vorgaben festzulegen, wobei die Verarbeitung z. B. beim Einhalten der Vorgaben oder beim Verletzten der Vorgaben automatisiert durch das System gesteuert wird.

Bei weiteren Ausführungsformen des Systems wird das Registrieren mindestens einmal während einer Initialisierungsphase für eine Ressource ausgeführt.

Bei weiteren Ausführungsformen des Systems umfasst die Objektdatenstruktur eindeutige Merkmale der Ressource, wobei
- die Objektdatenstruktur einen eindeutigen Identifizierer für die Ressource umfasst, der beispielsweise anhand der eindeutigen Merkmale ermittelt wird, und/oder
- die Objektdatenstruktur eine Verarbeitungskonfiguration und/oder eine Steuerungskonfiguration umfasst, und/oder
- die Objektdatenstruktur Positionsdaten umfasst, um die eindeutigen Merkmale der Ressource zu erfassen.

Bei weiteren Ausführungsformen des Systems umfasst das System ein Prüfmodul, wobei
- das Prüfmodul dazu eingerichtet ist, ein Prüfergebnis einer Authentizität der Ressource anhand der eindeutigen Merkmale zu ermitteln,
- beispielsweise das Steuern und/oder Verarbeiten der Ressource anhand des Prüfergebnisses durchgeführt wird.

Bei weiteren Ausführungsformen des Systems umfasst das Steuerungsmodul oder das Speichermodul eine Kommunikationsschnittstelle, wobei die Kommunikationsschnittstelle dazu eingerichtet ist, Objektdaten über die Ressource in der eindeutig zugeordneten Objektdatenstruktur zu empfangen und/oder speichern.

Bei weiteren Ausführungsformen des Systems wird anhand der Objektdaten ein Objektzustand der Ressource ermittelt, wobei
- beispielsweise die Verarbeitungskonfiguration und/oder die Steuerungskonfiguration Steuerungsprogramme umfassen, die abhängig vom Objektzustand und/oder abhängig von einer Änderung des Objektzustandes ausgeführt werden,
- beispielsweise das Steuerungsmodul hierfür den Objektzustand überwacht und ggf. die Steuerungsprogramme ausführt.

Bei weiteren Ausführungsformen des Systems ist das Steuerungsmodul dazu eingerichtet, das Steuern und/oder Verarbeiten der Ressource anhand der Verarbeitungskonfiguration und/oder eine Steuerungskonfiguration zu steuern

Bei weiteren Ausführungsformen des Systems wird die Objektdatenstruktur in einer Netzwerkapplikation oder in mehreren Netzwerkapplikationen gespeichert, wobei
- beispielsweise die Verarbeitungskonfiguration und/oder die Steuerungskonfiguration vorgeben, welche Teile der Objektdatenstruktur in welcher Netzwerkapplikation gespeichert werden,
- beispielsweise die Verarbeitungskonfiguration und/oder die Steuerungskonfiguration eine entsprechende Netzwerkapplikation für vorgegebene Datentypen und/oder vorgegebene Nachrichtentypen vorgeben,
- beispielsweise das Speichern und/oder das Auswählen durch das Speichermodul und/oder das Steuerungsmodul erfolgt.

Bei weiteren Ausführungsformen des Systems wird die Objektdatenstruktur in einer Netzwerkapplikation oder in mehreren Netzwerkapplikationen gespeichert, wobei
- beispielsweise die Verarbeitungskonfiguration und/oder die Steuerungskonfiguration Netzwerkapplikationsanforderungen für das Speichern in einer Netzwerkapplikation vorgeben,
- beispielsweise anhand der Netzwerkapplikationsanforderungen ein Auswählen einer entsprechende Netzwerkapplikation zum Speichern erfolgt,
- beispielsweise die Verarbeitungskonfiguration und/oder die Steuerungskonfiguration vorgeben, welche für welche Teile der Objektdatenstruktur entsprechende Netzwerkapplikationsanforderungen vorggeben sind,
- beispielsweise das Speichern und/oder das Auswählen durch das Speichermodul und/oder das Steuerungsmodul erfolgt.

Bei weiteren Ausführungsformen des Systems ist das Steuerungsmodul für eine Überwachung der Ressource anhand der Objektdatenstruktur eingerichtet, wobei
- beispielsweise die Überwachung der Ressource anhand von Objektdaten der Objektdatenstruktur und/oder anhand der Verarbeitungskonfiguration und/oder der Steuerungskonfiguration erfolgt,
- beispielsweise für die Überwachung ein Überwachungsprüfergebnis ermittelt wird,
- beispielsweise anhand des Überwachungsprüfergebnisses ein Steuersignal, wie ein Alarmsignal, bereitgestellt wird, wenn z. B. das Überwachungsprüfergebnis eine Überschreitung oder eine Verletzung der Verarbeitungskonfiguration und/oder der Steuerungskonfiguration angibt,
- beispielsweise anhand des Überwachungsprüfergebnisses ein Steuersignal, wie ein Steuersignal zum Verarbeiten der Ressource durch ein Gerät, bereitgestellt wird, wenn z. B. das Überwachungsprüfergebnis ein Einhalten der Verarbeitungskonfiguration und/oder der Steuerungskonfiguration angibt.

Bei weiteren Ausführungsformen des Systems umfasst das System ein Identifikationsmodul, wobei
- das Identifikationsmodul zum Ermitteln eines Identifikationsprüfergebnisses für die Ressource eingerichtet ist,
- beispielsweise das Identifikationsprüfergebnis das zugehörige Objekt und/oder die zugehörige Objektdatenstruktur für die Ressource identifiziert,
- beispielsweise anhand des Identifikationsprüfergebnisses der Ressource Zugriffsrechte gewährt werden.

Bei weiteren Ausführungsformen des Systems umfasst das System ein Konfigurationsmodul, wobei
- das Konfigurationsmodul zum Ermitteln der Verarbeitungskonfiguration und/oder der Steuerungskonfiguration eingerichtet ist,
- beispielsweise die Verarbeitungskonfiguration und/oder die Steuerungskonfiguration anhand von historischen Daten für die Ressource oder für andere Ressourcen ermittelt werden,
- beispielsweise die Steuerungsprogramme durch das Konfigurationsmodul anhand der ermittelten Verarbeitungskonfiguration und/oder der ermittelten Steuerungskonfiguration und/oder anhand der historischen Daten ermittelt werden.

Gemäß einem weiteren Aspekt betrifft die Erfindung ein Gerät umfassend:
- eine Kommunikationsmodul, wobei
   - das Kommunikationsmodul dazu eingerichtet ist, mit einem System zu kommunizieren,
   - das System beispielsweise eine System nach einem der Ansprüche 1 - 12 ist,
   - das Gerät beispielsweise mit einer Kommunikationsschnittstelle des Systems kommuniziert;
- ein Objektdatenerfassungsmodul, wobei
   - das Objektdatenerfassungsmodul dazu eingerichtet ist, Objektdaten über das Gerät und/oder über eine Ressource zu erfassen,
   - die Objektdaten mittels des Kommunikationsmoduls an das System übertragen werden;
- ein Verarbeitungsmodul, wobei
   - das Verarbeitungsmodul dazu eingerichtet ist, ein Steuersignal von dem System als Antwort auf die übertragenen Objektdaten zu empfangen,
   - das Steuersignal das Gerät und/oder die Ressource steuert.

Gemäß einem weiteren Aspekt betrifft die Erfindung ein computerimplementiertes Verfahren mit folgenden Verfahrensschritten:
- Registrieren einer Ressource als ein Objekt, wobei
   - beim Registrieren eine Objektdatenstruktur für das Objekt ermittelt wird,
   - die Objektdatenstruktur der Ressource eindeutig zugeordnet ist,
- Speichern der Objektdatenstruktur;
- Steuern und/oder Verarbeiten der Ressource anhand der Objektdatenstruktur des Objektes.

Gemäß einem weiteren Aspekt betrifft die Erfindung ein computerimplementiertes Verfahren zum Steuern eines Gerätes mit folgenden Verfahrensschritten
- Kommunizieren mit einem System, wobei
   - das System beispielsweise ein System nach einem der Ansprüche 1 - 12 ist,
   - beispielsweise mit einer Kommunikationsschnittstelle des Systems kommuniziert wird;
- Erfassen von Objektdaten über ein Gerät und/oder über eine Ressource, wobei
   - die Objektdaten an das System übertragen werden;
- Empfangen eines Steuersignals von dem System als Antwort auf die übertragenen Objektdatenwobei
- das Steuersignal das Gerät und/oder die Ressource steuert.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass das genannte erfindungsgemäße Gerät oder das System erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es das erfindungsgemäße Gerät oder System erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

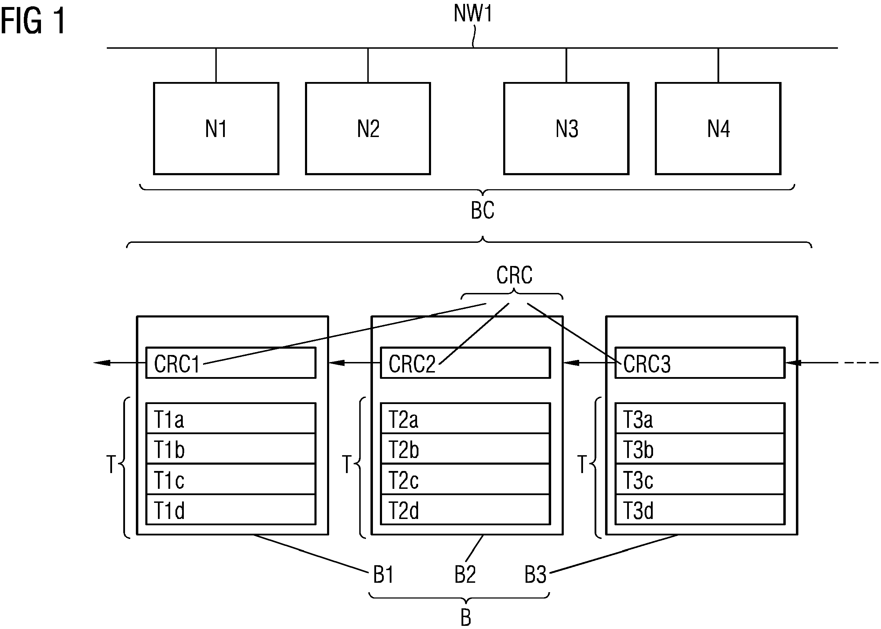

Die Fig. 1 bis Fig. 4 zeigen jeweils Ausführungsbeispiele der unterschiedlichen Aspekte der Erfindung.

Fig. 1 zeigt dabei ein System, das verwendet wird, um eine Ressource zu Steuern und/oder zu verarbeiten.

In Fig. 1 sind ein erster Knoten N1, ein zweiter Knoten N2, ein dritter Knoten N3 und ein vierter Knoten N4 gezeigt, die die Knoten der Netzwerkapplikation BC (z. B. das verteilte Datenbanksystem, das z. B. als Blockkette realisiert ist) bilden, wobei einer der Knoten, z. B. der erste Knoten N1, das (erfindungsgemäße) Gerät umfasst oder dem erfindungsgemäßen Gerät entspricht. Die Knoten sind dabei z. B. über ein erstes Kommunikationsnetzwerk NW1 miteinander verbunden.

Die Konten N2 - N4 können beispielsweise das erfindungsgemäße System implementieren.

Des Weiteren zeigt die Fig. 1 Blöcke B, beispielsweise einen ersten Block B1, einen zweiten Block B2 und einen dritten Block B3, einer Netzwerkapplikation BC, wobei hier insbesondere ein Ausschnitt der Netzwerkapplikation BC exemplarisch gezeigt ist. Im hier konkreten Fall kann die Netzwerkapplikation BC z. B. als Blockkette oder DLT realisiert sein.

Die Blöcke B umfassen jeweils mehrere Transaktionen T. Die Transaktionen T können dabei Steuertransaktionen und/oder Bestätigungstransaktionen und/oder eine Datenstruktur und/oder einen Objektdatensatz und/oder erfasste individuelle Merkmale umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die die Netzwerkapplikation oder die Blockkette BC selbst wird durch eine Blockketten-Infrastruktur mit mehreren Bloccketten-Knoten (Knoten N1, N2, N3, N4 und weiteren Blöcken) realisiert. Bei den Knoten kann es sich beispielsweise um Blockkettenorakel oder vertrauenswürdige Knoten handeln.

Die Knoten sind über das Netzwerk NW1 (z. B. ein Kommunikationsnetzwerk wie das Internet oder ein Ethernet-Netzwerk) miteinander kommunikativ verbunden. Mittels der Netzwerkapplikationsinfrastruktur bzw. der Blockketten-Infrastruktur werden beispielsweise zumindest ein Teil der Datenblöcke B oder alle Datenblöcke B der Netzwerkapplikation BC für einen Teil oder alle Knoten der Netzwerkapplikation repliziert.

Das (erfindungsgemäße) Gerät kann beispielsweise als Komponente der Netzwerkapplikation oder in Varianten einer Kommunikationsinfrastruktur (z. B. ein Peer-2-Peer System, einer verteilten Kommunikationsinfrastruktur) sein. Das Gerät kann beispielsweise mittels der Netzwerkapplikation mit anderen Geräten oder Datenbanken oder Systemen oder verteilten Datenbanksystemen kommunizieren oder in Varianten mittels einer Kommunikationsinfrastruktur (z. B. ein Peer-2-Peer System, einer verteilten Kommunikationsinfrastruktur) miteinander kommunizieren.

Das (erfindungsgemäße) Gerät umfasst z. B. ein Kommunikationsmodul, ein Objektdatenerfassungsmodul und ein Verarbeitungsmodul (z. B. eine Netzwerkschnittstelle), die über einen Bus (z. B. ein PCI Bus, CAN Bus, USB oder Datenleitung) kommunikativ miteinander verbunden sind.

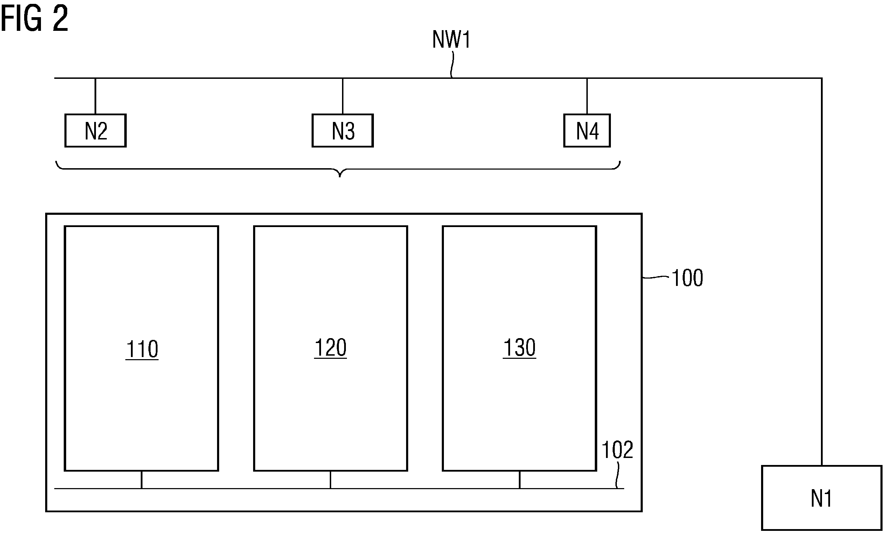

Das Kommunikationsmodul ist dazu eingerichtet, mit dem erfindungsgemäßen System (in Fig. 2 genauer erläutert) zu kommunizieren, wobei das Gerät beispielsweise mit einer Kommunikationsschnittstelle des Systems kommuniziert.

Das Objektdatenerfassungsmodul ist dazu eingerichtet, Objektdaten über das Gerät und/oder über eine Ressource zu erfassen, wobei die Objektdaten mittels des Kommunikationsmoduls an das System übertragen werden.

Das Verarbeitungsmodul ist dazu eingerichtet, ein Steuersignal von dem System als Antwort auf die übertragenen Objektdaten zu empfangen, wobei das Steuersignal das Gerät und/oder die Ressource steuert.

Die Knoten der Netzwerkapplikation (z. B. Blockketten-Knoten) und/oder das System und/oder das verteilte Datenbanksystem und/oder das (erfindungsgemäße) Gerät können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Die Fig. 2 zeigt beispielhaft an einem weiteren Ausführungsbeispiel die Funktionsweise des (erfindungsgemäßen) Systems. Das System kann beispielsweise auch mit dem vorhin erläuterten erfindungsgemäßen Gerät kommunizieren.

Die Fig. 2 zeigt im Einzelnen ein (erfindungsgemäßes) System 100 zur Steuerung und/oder Verarbeitung einer Ressource.

Das System kann beispielsweise durch einen oder mehrere Knoten (z. B. N2 und/oder N3 und/oder N4) aus Fig. 1 realisiert werden.

Das System 100 umfasst ein Registrierungsmodul 110, ein Speichermodu1120, ein Steuerungsmodu1130 und eine Kommunikationsschnittstelle (z. B. eine Netzwerkschnittstelle), die über einen Bus (z. B. ein PCI Bus, CAN Bus, USB oder Datenleitung) 102 kommunikativ miteinander verbunden sind. Alternativ kann jedes Modul jeweils eine Kommunikationsschnittstelle umfassen und der Bus z. B. mittels eines Netzwerkes NW1 realisiert werden.

Das System 100 umfasst optional einen Prozessor, der ggf. bzw. falls vorhanden über den Bus (z. B. ein PCI Bus, CAN Bus, USB oder Datenleitung) 102 ebenfalls kommunikativ angebunden ist.

Das Registrierungsmodul 110 ist zum Registrieren einer Ressource als ein Objekt eingerichtet, wobei beim Registrieren eine Objektdatenstruktur für das Objekt ermittelt wird, und wobei die Objektdatenstruktur der Ressource eindeutig zugeordnet ist.

Das Speichermodul ist zum Speichern der Objektdatenstruktur eingerichtet.

Die Objektdatenstruktur kann z. B. eindeutige Merkmale der Ressource umfassen, und/oder einen eindeutigen Identifizierer (UID) für die Ressource umfassen, der beispielsweise anhand der eindeutigen Merkmale ermittelt wird, und/oder eine Verarbeitungskonfiguration und/oder eine Steuerungskonfiguration umfassen, und/oder Positionsdaten umfassen, um die eindeutigen Merkmale der Ressource zu erfassen.

Das System umfasst in einer Variante ein Prüfmodul, wobei das Prüfmodul dazu eingerichtet ist, ein Prüfergebnis einer Authentizität der Ressource anhand der eindeutigen Merkmale zu ermitteln. Hierdurch kann beispielsweise festgestellt werden, ob die Ressource tatsächlich die echte Ressource ist oder ob diese z. B. durch eine Fälschung ausgetauscht wurde. Diese Information wird im Prüfergebnis gespeichert.

Vorzugsweise werden die Positionsdaten durch das System an ein Erfassungsgerät übermittelt, sodass das Erfassungsgerät die eindeutigen Merkmale der Ressource erfassen kann und an das System (z. B. das Steuerungsmodul) übertragen kann.

Vorzugsweise wird die Objektdatenstruktur in einer Netzwerk-applikation oder in mehreren Netzwerkapplikationen gespeichert. Beispielsweise gibt die Verarbeitungskonfiguration und/oder die Steuerungskonfiguration Netzwerkapplikationsanforderungen für das Speichern in einer Netzwerkapplikation vor, wobei beispielsweise anhand der Netzwerkapplikationsanforderungen ein Auswählen einer entsprechende geeigneten Netzwerkapplikation zum Speichern erfolgt.

Die Verarbeitungskonfiguration und/oder die Steuerungskonfiguration geben dabei vor, für welche Teile der Objektdatenstruktur entsprechende Netzwerkapplikationsanforderungen vorgeben sind. Entsprechenden können beispielsweise sicherheitskritische Teile der Objektedatenstruktur (z. B. wichtiges Firmen Know-How oder Informationen, aus denen sich wichtige Firmenkennzahlen ableiten lassen) in einer sicheren Netzwerkapplikation gespeichert werden, bei der z. B. nur Personen einen Zugriff erhalten, die sich entsprechend authentisieren. Unkritische Teile der Objektdatenstruktur (z. B. Name der Ressource) können beispielsweise in einer öffentlich zugreifbaren Netzwerkapplikation gespeichert werden.

Das Speichern und/oder das Auswählen kann dabei z. B. durch das Speichermodul und/oder das Steuerungsmodul erfolgen.

Das Steuerungsmodul ist zum Steuern und/oder Verarbeiten der Ressource anhand der Objektdatenstruktur des Objektes eingerichtet.

Das Steuern und/oder Verarbeiten der Ressource erfolgt vorzugsweise anhand der Verarbeitungskonfiguration und/oder eine Steuerungskonfiguration, wobei beispielsweise das Steuern und/oder Verarbeiten der Ressource anhand des Prüfergebnisses durchgeführt wird, um z. B. zu verhindern, dass eine gefälschte Ressource mit niedriger Qualität verarbeitet wird.

Vorzugsweise wird die Ressource mindestens einmal während einer Initialisierungsphase für die Ressource registriert.

Das (erfindungsgemäße) Gerät N1 kann beispielsweise als Komponente der Netzwerkapplikation oder in Varianten einer Kommunikationsinfrastruktur (z. B. ein Peer-2-Peer System, einer verteilten Kommunikationsinfrastruktur) sein. Das Gerät kann beispielsweise mittels der Netzwerkapplikation mit anderen Geräten oder Datenbanken oder Systemen oder verteilten Datenbanksystemen kommunizieren oder in Varianten mittels einer Kommunikationsinfrastruktur (z. B. ein Peer-2-Peer System, einer verteilten Kommunikationsinfrastruktur) miteinander kommunizieren.

Das (erfindungsgemäße) Gerät N1 umfasst z. B. ein Kommunikationsmodul, ein Objektdatenerfassungsmodul und ein Verarbeitungsmodul (z. B. eine Netzwerkschnittstelle), die über einen Bus (z. B. ein PCI Bus, CAN Bus, USB oder Datenleitung) kommunikativ miteinander verbunden sind.

Das Kommunikationsmodul ist dazu eingerichtet, mit dem erfindungsgemäßen System (in Fig. 2 genauer erläutert) zu kommunizieren, wobei das Gerät beispielsweise mit einer Kommunikationsschnittstelle des Systems kommuniziert.

Das Objektdatenerfassungsmodul ist dazu eingerichtet, Objektdaten über das Gerät und/oder über eine Ressource zu erfassen, wobei die Objektdaten mittels des Kommunikationsmoduls an das System übertragen werden.

Das Verarbeitungsmodul ist dazu eingerichtet, ein Steuersignal von dem System als Antwort auf die übertragenen Objektdaten zu empfangen, wobei das Steuersignal das Gerät und/oder die Ressource steuert.

Die Knoten der Netzwerkapplikation (z. B. Blockketten-Knoten) und/oder das System und/oder das verteilte Datenbanksystem und/oder das (erfindungsgemäße) Gerät N1 können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN, USB, Feldbus, PCI), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Beispielsweise ist das Gerät N1 die Ressource.

In einer weiteren Variante ist die Kommunikationsschnittstelle des Systems 100 durch eine Kommunikationsschnittstelle des Steuerungsmoduls oder des Speichermoduls realisiert.

Über die Kommunikationsschnittstelle werden z. B. Objektdaten über die Ressource (z. B. des Gerätes) empfangen und in der eindeutig zugeordneten Objektdatenstruktur gespeichert.

Anhand der Objektdaten kann z. B. ein Objektzustand (z. B. betriebsbereit, defekt, Wartung notwendig, ausgelastet, Verarbeitungskonfiguration und/oder Steuerungskonfiguration eingehalten oder überschritten) der Ressource ermittelt werden.

Die Verarbeitungskonfiguration und/oder die Steuerungskonfiguration können dabei Steuerungsprogramme umfassen, die abhängig von Objektzustand und/oder abhängig von einer Änderung des Objektzustandes ausgeführt werden (z. B. ein Wartungsprogramm) .

Hierzu überwacht beispielsweise das Steuerungsmodul den Objektzustand und führt ggf. die entsprechenden Steuerungsprogramme aus.

Bei den Steuerprogrammen kann es sich beispielsweise um Smart-Contracts der Netzwerkapplikation handeln.

Mit anderen Worten kann mittels der Erfindung ein System zum Supply-Chain-Management implementiert werden.

Das Registrierungsmodul (z. B. als ein Asset-Repository realisiert) erlaubt Beteiligten einen praktischen Zugriff auf die Datenstruktur unabhängig von den verteilten Datenquellen.

Durch die Möglichkeit des Speicherns in verschiedenen Netzwerkapplikationen kann eine Stakeholder-Trennung implementiert werden, wobei durch das Speichermodul ggf. ein Zugriff auf die entsprechenden Netzwerkapplikationen erfolgen kann, ohne, dass z. B. ein Stakeholder manuell herausfinden muss, welcher Teil der Datenstruktur in einer entsprechenden Netzwerkapplikation gespeichert ist.

Im System wird durch das Registrierungsmodul und/oder das Speichermodul für eine Ressource (z. B. ein Asset) eine eindeutig zugeordnete Objektdatenstruktur während der Initialisierungsphase erzeugt und während der späteren Verarbeitungsphase wird die Ressource anhand der in der Objektdatenstruktur gespeicherten Informationen verarbeitet und/oder gesteuert.

Eine Ressource kann sich z. B. daher auf eine physische Ressource beziehen. Bei der physischen Ressource kann es sich um ein physisches Objekt handeln, das für einen Beteiligten an einem anlagenbasierten industriellen Prozess zumindest einen subjektiven Wert hat und das mindestens eine digital verfolgbare Eigenschaft aufweist.

Die Ressource kann sich auch auf eine digitale Ressource beziehen oder auch auf physische Objekte (z.B. elektronische Geräte, 3D-Druckobjekte, Ressourcen wie Diamanten, Metall, Wasser, Milch) oder immaterielle Ressourcen (z. B. geistiges Eigentum, Dokumente, Rechnungen, Lizenzen, Drucklayoutteile und ähnliches).

Eine entsprechende Ressource wird mit ihren Eigenschaften (z.B. auch als Attribute bezeichnet) in der Objektdatenstruktur beschrieben.

Die erfassten Informationen und/oder Initialisierungsdaten über eine Ressource werden z. B. während der Initialisierungsphase festgelegt und/oder erfasst und in der Objektdatenstruktur gespeichert. Die Objektdatenstruktur wird dann von dem System verwaltet und/oder verarbeitet (z. B. Aktualisierung, Freigabe, Version) wird.

Das System (z. B. ein UAP wie in Application no / Patent No 19168945.5 - 1222) verarbeitet die Objektdaten über die Ressource und/oder stellt Informationen (z. B. auch als Objektdaten bezeichnet) der Objektdatenstruktur der Ressource ganz oder teilweise bereit. Die Objektdaten können dabei z. B. auch die Initialisierungsdaten umfassen.

Diese Informationen können z. B. der Objektzustand (z. B. betriebsbereit, defekt, Wartung notwendig, ausgelastet, Verarbeitungskonfiguration und/oder Steuerungskonfiguration eingehalten oder überschritten) sein. Diese Informationen können z. B. über ein entsprechendes Dashboard dem berechtigten Stakeholder zur Verfügung gestellt werden, wenn sich dieser bei dem Dashboard oder dem System authentisiert hat.

Wird beispielsweise ein physisches Objekt, wie das Gerät N1 registriert, so kann dies z. B. dadurch erfolgen, dass für das Gerät eindeutige Merkmale (z. B. eine eindeutige Kennung (UID)) erfasst wird. Eine entsprechende eindeutige Kennung (UID) wird vorzugsweise von eindeutigen Merkmalen der Ressource abgeleitet.

Bei diesen eindeutigen Merkmalen kann es sich z.B. um eine UID handeln, die durch eine PUF oder einen digitalen Fingerabdruck bereitgestellt wird (z.B. Fingerprint eines Rauschens von elektronischen Schaltkreisen, spektrale Fingerprints von Materialien, Fingerprints der Oberfläche der Ressource).

Die UID kann durch eine kryptographische Funktion abgeleitet werden, die in der Objektdatenstruktur gespeichert ist, um die Offenlegung des Fingerprints, auf dem sie basiert, zu vermeiden.

Vorzugsweise ist die UID ein Teil eines Registrierungsdatensatzes, der in der Initialisierungsphase in der Objektdatenstruktur gespeichert wird.

Dieser Datensatz kann z. B. die Verarbeitungskonfiguration und/oder die Steuerungskonfiguration (z. B. auch als Handhabungs- und/oder Kontrollanforderungen bezeichnet) für die Ressource, den Eigentümer der Ressource, das Ziel der Ressource, Herstellungsinformationen, Herstellerinformationen, Herkunft usw. enthalten.
Mit Hilfe der Verarbeitungskonfiguration und/oder der Steuerungskonfiguration kann die Nutzung der Ressource gesteuert werden.

Beispielsweise definieren die Verarbeitungskonfiguration und/oder die Steuerungskonfiguration Betriebsparameter für die Ressource. Diese Parameter verlangen z. B., dass die Ressource nur in bestimmten geographischen Regionen betrieben werden kann oder einen Betrieb in einem bestimmten Temperaturbereich erfordert oder alle 2 Monate gewartet werden muss.

Darüber hinaus könnte der Registrierungsdatensatz bzw. die Objektdatenstruktur Informationen darüber enthalten, wo der Fingerprint zur Berechnung der UID zu erfassen ist, jedoch vorzugsweise nicht den Fingerprint selbst.

Auf diese Weise kann ein neuer Interessenvertreter die bereits gespeicherte UID mit einem soeben erfassten Fingerprint /UID vergleichen, um festzustellen, ob die Ressource authentisch ist.

Während der Lebensdauer der Ressource werden alle Arten von Informationen überwacht und mittels der Objektdaten in der Netzwerkapplikation gespeichert.

Zu diesem Zweck kann die Ressource mit einem Kommunikationsmodul (z. B. das Kommunikationsmodul des Gerätes) oder einem Überwachungsgerät (z. B. das Objektdatenerfassungsmodul des Gerätes, das beispielsweise Sensoren zum Erfassen der Objektdaten umfasst) ausgestattet werden, um die entsprechenden Daten an das System zu übertragen, das die Daten in der entsprechenden Objektdatenstruktur speichert und z. B. über die Objektdatenstruktur bestimmt wird, in welcher Netzwerkapplikation diese ggf. tatsächlich gespeichert werden.

Überwacht das Gerät die Ressource kann das Objektdatenerfassungsmodul Sensoren umfassen, um die notwendigen Objektdaten zu ermitteln. Das System empfängt die Daten und prüft (bzw. die jeweilige Netzwerkapplikation, in der die entsprechenden Objektdaten gespeichert werden), ob z. B. die Verarbeitungskonfiguration und/oder die Steuerungskonfiguration erfüllt sind.

Wird z. B. eine Verletzung der Verarbeitungskonfiguration und/oder der Steuerungskonfiguration festgestellt, kann ein Steuersignal erzeugt werden. Das Steuersignal kann z. B. die Abschaltung einer Infrastruktur bewirken, weil diese Verletzung eine Katastrophe oder einen Schaden verursachen könnte (z. B. wenn die Sicherheitsmechanismen eines Staudamms nicht korrekt gewartet werden, könnte eine Gasturbine ausfallen und die gesamte Anlage beschädigen - entsprechend kann eine Ressource auch ein Staudamm oder ein Gaskraftwerk sein bzw. Komponenten von diesen).

Im Detail kann dies durch Steuerungsprogramme (z. B. Smart-Contracts) realisiert werden, die z. B. einen intelligenten Vertrag in einer entsprechenden Netzwerkapplikation implementieren.

Der Smart-Contract prüft, ob die die Verarbeitungskonfiguration und/oder die Steuerungskonfiguration erfüllt sind und übermittelt dieses Prüfergebnis an System oder das Steuerungsmodul. Auf der Grundlage dieses Ergebnisses kann das System das erforderliche Steuersignal erzeugen.

Das Steuersignal kann beispielsweise Steuerbefehle kodieren. Wird das Steuersignal an die Ressource übertragen, können mit dem Steuersignal bzw. den Steuerbefehlen die Ressource gesteuert werden. Wird das Steuersignal an ein anderes Gerät übertragen, so kann mit dem anderen Gerät beispielsweise die Ressource ver- oder bearbeitet werden.

Mittels des Systems und/oder dem Speichermodul kann eine Multiplexer-Funktionalität der Objektdatenstruktur implementiert werden, indem z. B. verschiedene Teile der Objektdatenstruktur in unterschiedlichen Netzwerkapplikationen gespeichert werden.

Beispielsweise ist die Eingabe der Objektdaten und/oder die Verwaltung der Objektdaten logisch von den Verarbeitungsprozessen getrennt.

Dies wird z. B. durch die Verwendung einer oder mehrerer Transaktionsschicht-Plattformen realisiert, indem z. B. Objektdaten als Monitoringtransaktionen an das System übertragen werden. Entsprechend der Verarbeitungskonfiguration und/oder der Steuerungskonfiguration werden diese Informationen der Objektdatenstruktur in einer Netzwerkapplikation für Objektdaten gespeichert. Zum Verarbeiten oder Steuern der Ressource werden Steuerungsprogramme (z. B. Smart-Contracs) durch eine weitere Netzwerkapplikation oder der gleichen Netzwerkapplikation ausgeführt, die die Objektdaten auswerten. Es können noch weitere Netzwerkapplikationen verwendet werden, die Steuerprogramme für weitere Verwaltungsaufgaben umfassen oder für andere Aufgaben von Anlagen, Betrieb, Anlagenkontrollen und Anlagenhandhabung dienen.

Bei den jeweiligen Netzwerkapplikationen kann es sich z. B. um verschiedene physisch getrennte Plattformen handeln oder auch um eine integrale Plattform, die lediglich logisch in ihrer Funktionalität getrennt ist.

Zusammenfassend lässt sich sagen, dass das System in Abhängigkeit von der Verarbeitungskonfiguration und/oder der Steuerungskonfiguration unter Berücksichtigung der Anzahl der Interessenvertreter in der Lage ist, als Multiplexer zwischen potentiell mehreren Entitäten oder Stakeholdern zu fungieren, die über das System miteinander interagieren.

Beispielsweise kann die einer Ressource zugeordnete Objektdatenstruktur mittels der Verarbeitungskonfiguration und/oder der Steuerungskonfiguration mehrere Netzwerkapplikationen definieren (z. B. Cloud A, Blockkette B), die zum Verarbeiten und/oder Steuern der Ressource genutzt werden. Die Verarbeitungskonfiguration und/oder die Steuerungskonfiguration können auch definieren, welche Art von Informationen in welcher Netzwerkapplikation gespeichert werden soll.

So könnte z. B. die Überwachung der UID der Ressource während eines Herstellungs- und Lieferprozesses in Cloud A gespeichert werden, und die Überwachung des Betriebs der Ressource und die Überwachung, ob die Handhabungs- und Kontrollanforderungen erfüllt sind oder nicht, werden in der Blockkette B gespeichert.
Die Verarbeitungskonfiguration und/oder die Steuerungskonfiguration muss nicht unbedingt eine bestimmte Netzwerkapplikation definieren. Stattdessen kann die Verarbeitungskonfiguration und/oder die Steuerungskonfiguration spezifische Parameter für eine (Ziel-)Netzwerkapplikation definieren, und das System wählt auf der Grundlage dieser Parameter die geeignete Netzwerkapplikation aus oder verbietet die Verwendung spezifischer Netzwerkapplikationen.

Beispielsweise erlauben die Verarbeitungskonfiguration und/oder die Steuerungskonfiguration die Verwendung einer öffentlichen Netzwerkapplikation (z. B. eine Blockkette) für Herstellungs- und Lieferzwecke, verbieten aber die Verwendung einer öffentlichen Netzwerkapplikation zur Überwachung von Daten. Das System (z. B. das Steuerungsmodul) prüft bei eingehenden Daten, die in einer Blockkette gespeichert werden sollen, welche Netzwerkapplikationen geeignet sind.

Das System könnte z. B. so über die Verarbeitungskonfiguration und/oder die Steuerungskonfiguration konfiguriert werden, dass es eine spezifische Netzwerkapplikation erstellt (z. B. als Cloud-Service), wenn eine erforderliche Netzwerkapplikation nicht verfügbar ist. Darüber hinaus kann das System z. B. die Funktionalität der jeweiligen Netzwerkapplikation modifizieren.

Dies kann erforderlich sein, wenn die jeweilige Ressource durch eine neue Ressource ersetzt wird. In einem solchen Fall kann die Netzwerkapplikation, in der die monitorischen Daten (z. B. die Objektdaten oder die Objektdatenstruktur) über die ersetzte Ressource gespeichert sind, in einen schreibgeschützten Modus versetzt werden, weil es nicht erlaubt ist oder nicht gewünscht wird, neue Daten zu dieser alten Netzwerkapplikation hinzuzufügen, die Daten aber aus Revisionszwecken aufbewahrt werden.

Mittels des Speichermoduls wird die Objektdatenstruktur gespeichert, wobei der tatsächliche Zielort der Objektdatenstruktur oder Teile davon durch die Verarbeitungskonfiguration und/oder die Steuerungskonfiguration festgelegt wird. Die Vorgaben der Verarbeitungskonfiguration und/oder der Steuerungskonfiguration hinsichtlich des Speichers der Objektdatenstruktur spiegeln den Bedarf an unterschiedlicher Informationsverarbeitung je nach Leistung, Größe und Anforderungen der Beteiligten und Geschäftsprozesse wider. Beispielsweise können riesige Datenmengen, die einer bestimmten Ressource zugeordnet sind, z. B. nicht in der Blockkette gespeichert werden und müssen für den späteren Abruf außerhalb der Kette gesichert werden.

Der Zugriff auf die Objektdatenstruktur kann über das Speichermodul oder ein Datenzugriffsmodul des Systems erfolgen, wobei ein Zugriff auf die Objektdatenstruktur bzw. deren Teile abstrahiert erfolgt. Das bedeutet, dass dies insbesondere unabhängig von dem konkreten Speicherort der Objektdatenstruktur erfolgt.

Für den Zugriff kann das Speichermodul oder das Datenzugriffsmodul ein Dashboard und/oder eine Ressourcen-Datenstruktur-Mapping-Anzeige und/oder eine Datenverarbeitungsschnittstelle umfassen, damit z. B. Systeme von Stakeholdern oder Aufsichtsbehörden die entsprechenden Daten der Objektdatenstruktur für eine entsprechende Ressource verarbeiten können.

Das System verfolgt eine entsprechende Ressource mittels der Objektdatenstruktur, um deren korrekten Zustand sicherzustellen. Hierzu können folgende Informationen oder Objektdaten vom System verarbeitet werden, um den Objektzustand bei jeder Zustandsänderung und/oder in einem vordefinierten Zeitintervall abzurufen und aufrechtzuerhalten:
- Stakeholder-Transaktion
- Feedback-Kanal der Anlagenkommunikation
- Ressourcen-Alarm bzw. ein Signal der Ressource
- Proxy-Kommunikation bzw. Kommunikationsdaten der Ressource

Stakeholder-Transaktionen sind solche, die vor jeder Ressourcenbearbeitung oder Ressourcenhandhabung festgelegt werden und/oder Aktionen des Stakeholders umfassen, die durch den Geschäftsprozess vordefiniert sind, wahrscheinlich durch einen intelligenten Vertrag oder ähnliche Softwarelösungen realisiert werden und in der anfänglichen Verwaltungsphase in der Objektdatenstruktur gespeichert werden. Mit anderen Worten können beispielsweise Verarbeitungs-, Bearbeitungs- oder Steuerungsschritte, die ein Stakeholder mit der Ressource durchführt, auf diese Weise dokumentiert werden.

Über den Feedback-Kanal einer Anlagenkommunikation einer Anlage werden Objektdaten übertragen, die von einer Anlage über ihre Kommunikationsmöglichkeiten gesendet werden. Beispiele sind IoT-Geräte, die z. B. über Mobilfunknetze mit dem Internet verbunden sind. Die Ressource oder das Gerät oder ein Erfassungsgerät zum Erfassen von Objektdaten kann hierbei eine der Kommunikationsmöglichkeiten sein oder mit den Kommunikationsmöglichkeiten kommunikativ gekoppelt sein.

Bei Objektdaten in Form eines Ressourcen-Alarms bzw. eines Signals der Ressource handelt es sich beispielsweise um einen Notfallmechanismus, der mittels eines Proxies oder des Gerätes oder des Erfassungsgerätes implementiert ist. Das Signal oder der Alarm kann über die Kommunikationsschnittstelle an das System gesendet werden. Das System kann aber auch selbst Objektdaten in Form eines Ressourcen-Alarms bzw. eines Signals der Ressource erzeugen, wenn das Fehlen vorgegebener Ereignisse erkannt wird (z. B. durch die Verarbeitungskonfiguration und/oder die Steuerungskonfiguration vorgegeben). Dies ist der Fall, wenn z. B. ein reguläres Signal oder eine reguläre Kommunikation durch die Ressource ausbleibt oder ein vorgegebenes Kommunikationsintervall überschritten wird. Ein weiteres Beispiel könnte die Abschaltung und leere Batterie eines IoT-Geräts sein, von dem angenommen wird, dass es nach jedem vordefinierten Zeitintervall eine Aktualisierung sendet.

Bei der Proxy-Kommunikation sendet z. B. eine andere Entität (z. B. das Gerät oder ein System zum Überwachen der Ressource) oder eine andere Ressource oder die Ressource selbst Informationen an das System. Beispielsweise sendet ein Gateway im Namen aller zugewiesenen IoT-Geräte Informationen (berechnet, komprimiert, nativ, zusammengefasst) an das System die entsprechenden Objektdaten für die Ressource.

Zusammengefasst ist das System in der Lage, den aktuellen Objektzustand einer entsprechenden Ressource auf der Grundlage der Objektdaten in der entsprechenden Objektdatenstruktur zu ermitteln und/oder zu überwachen und/oder mit Steuerungsprogrammen (Smart-Contracts) ggf. auf den Objektzustand zu reagieren.

In einer weiteren Variante umfasst das System ein Identifikationsmodul, wobei das Identifikationsmodul zum Ermitteln eines Identifikationsprüfergebnisses für die Ressource eingerichtet ist. Das Identifikationsmodul kann beispielsweise das Identifikationsprüfergebnis dazu nutzen, das zugehörige Objekt und/oder die zugehörige Objektdatenstruktur für die Ressource zu identifizieren. Alternativ kann das Identifikationsmodul beispielsweise anhand des Identifikationsprüfergebnisses der Ressource Zugriffsrechte gewähren. Das Identifikationsmodul kann mittels eines zentral implementierten Identitäts- und Zugriffsmechanismus realisiert sein oder mittels eines dezentral implementierten Identitäts- und Zugriffsmechanismus oder mittels eines föderalen Identitäts- und Zugriffsmechanismus oder mittels eines PKI Identitäts- und Zugriffsmechanismus realisiert sein.

Mit anderen Worten kann mittels des Identifikationsmoduls ein Identitätsmanagement realisiert werden, das z. B. die Bereitstellung und Durchsetzung von Zugriffsrechten gewährleistet. So kann z. B. das Einbinden neuer Stakeholder erfordern, dass z. B. bei einem Zugriff auf die riesige Menge an bereitgestellten Informationen des Systems sichergestellt wird, dass strenge IAM-Prozesse eingehalten werden, um Vertrauen zu schaffen, Betrug, Verlust und Fehlfunktionen des Systems zu vermeiden.

Das Steuerungsmodul stellt z. B. das Steuern und/oder Verarbeiten der Ressource sicher (z. B. mit den Steuerungsprogrammen). Beispielsweise kann ein Ressourcen-Tracking (auch als Asset-Tracking bezeichnet) realisiert werden, indem z. B. gespeicherte Objektdaten zu einer entsprechenden Ressource bereitgestellt werden. Um z. B. eine korrekte Steuerung und/oder Verarbeitung der Ressource zu realisieren, gleicht das Steuerungsmodul z. B. bei jeder Zustandsänderung des Objektzustandes den aktuellen Objektzustand mit dem in der Initialisierungsphase gespeicherten betrachteten Zustand ab und führt z. B. im Falle Verletzung der Verarbeitungskonfiguration und/oder der Steuerungskonfiguration ein entsprechendes Steuerungsprogramm und/oder löst ein entsprechendes Steuersignal aus.

Wie bereits erläutert führt das Steuerungsmodul die entsprechenden Steuerungsprogramme aus, die mit einem Objektzustand assoziiert sind oder mit dem Verletzen von Vorgaben der Verarbeitungskonfiguration und/oder der Steuerungskonfiguration assoziiert sind. Alternativ kann auch das Steuersignal das entsprechende Steuerungsprogramm ausführen bzw. deren Ausführung steuern.

Beispielsweise wird beim Empfangen von Objektdaten der Objektzustand bzw. dessen Änderung überprüft, ob diesem neuen Zustand oder der Zustandsänderung ein entsprechendes Steuerungsprogramm zugeordnet ist und führt es z. B. ggf. aus. Beim Objektzustand wird z. B. überprüft, ob eine Fehlersituation vorliegt, ob Alarme empfangen wurden oder ob sogar keine erwarteten Ereignisse vorliegen.

Ist ein entsprechender Objektzustand bzw. eine entsprechende Änderung des Objektzustandes erkannt worden, führt das Steuerungsmodul das entsprechende Steuerungsprogramm, z. B. basierend auf dem aktuellen Kontext, aus.

Es können beispielsweise auch mehrere Steuerungsprogramme ausgeführt werden, die mit dem Objektzustand oder einer entsprechenden Änderung des Objektzustandes assoziiert sind.

Das Steuerungsmodul erfasst z. B. die Objektdaten für die Ausführung des Steuerungsprogrammes, um die entsprechende Verarbeitung und/oder Steuerung der Ressource zu dokumentieren und z. B. das Aufrechterhalten oder Erreichen eines gewünschten Objektzustandes zu dokumentieren. Zum Beispiel führt eine Temperatur, die außerhalb der vordefinierten Grenzen eines IoT-Geräts liegt, dazu, dass mit dem Steuerungsprogramm ein Kühlgerät gestartet wird. Hierzu ist es notwendig, dass das Steuerungsprogramm die notwendigen Informationen zur Auslösung der entsprechenden Aktionen und alle erforderlichen Zugriffsrechte vor jeder Operation erhält bzw. umfasst.

In einer weiteren Variante umfasst das System ein Konfigurationsmodul, wobei das Konfigurationsmodul zum Ermitteln der Verarbeitungskonfiguration und/oder der Steuerungskonfiguration eingerichtet ist. Beispielsweise kann die Verarbeitungskonfiguration und/oder die Steuerungskonfiguration anhand von historischen Daten für die Ressource oder für andere Ressourcen ermittelt werden, wobei beispielsweise die Steuerungsprogramme durch das Konfigurationsmodul anhand der ermittelten Verarbeitungskonfiguration und/oder der ermittelten Steuerungskonfiguration und/oder anhand der historischen Daten ermittelt werden.

Beispielsweise kann das Konfigurationsmodul allen aktuellen Informationen, die im System gespeichert sind (z. B. alle historischen Daten und/oder durchgeführten Aktionen und/oder ausgeführte Steuerungsprogramme und die daraus resultierenden Objektdaten) nutzen. Beispielsweise kann das Konfigurationsmodul maschinelles Lernen nutzen, um die Beziehung zwischen Objektzuständen und/oder Steuerungsprogramme und/oder Objektdaten und/oder dem Steuern und/oder dem Verarbeiten der Ressource zu optimieren. Das Konfigurationsmodul lernt z. B. aus den durchgeführten Steuerungsprogrammen und/oder Objektdaten und/oder Objektzuständen, um eine optimierte oder alternative Verarbeitungskonfiguration und/oder eine optimierte oder alternative Steuerungskonfiguration zu ermitteln, um z. B. auf unvorhergesehene Objektzustände oder unvorhergesehene Änderungen von Objektzuständen zu reagieren. Wenn z. B. die Ressource aufgrund von Transportproblemen nicht verarbeitet werden kann, da z. B. aufgrund einer Naturkatastrophe der Transportweg blockiert ist, so kann durch die optimierte oder alternative Verarbeitungskonfiguration und/oder die optimierte oder alternative Steuerungskonfiguration eine Lösung vorgegeben sein, die z. B. einen alternativen Transportweg vorgibt, der zwar etwas länger dauert, jedoch die Ressource dennoch an das vorgegebene Ziel bringt.

Die Lösung wird z. B. in einem entsprechenden Steuerungsprogramm als Ausweichlösung codiert, wobei z. B. weiterhin der gewünschte Objektzustand aufrechterhalten wird (z. B. Ressource wird an das Ziel geliefert). Wenn z. B. diese Ausnahmebehandlung abgeschlossen ist, wird wieder das reguläre Steuerungsprogramm des Prozesses ausgeführt.

In einer weiteren Variante umfasst das System ein Konvertierungsmodul, wobei das Konvertierungsmodul dazu eingerichtet ist, die kommunizierten Daten (z. B. Objektdaten oder Daten des Steuerungsprogrammes oder Daten der Objektdatenstruktur) in ein entsprechendes Format zu konvertieren, das z. B. von der Ressource, der Netzwerkapplikation oder von dem System verarbeitet werden kann. Alternativ oder zusätzlich können die Daten in ein Format konvertiert werden, das von den entsprechenden Stakeholdern verarbeitet werden kann.

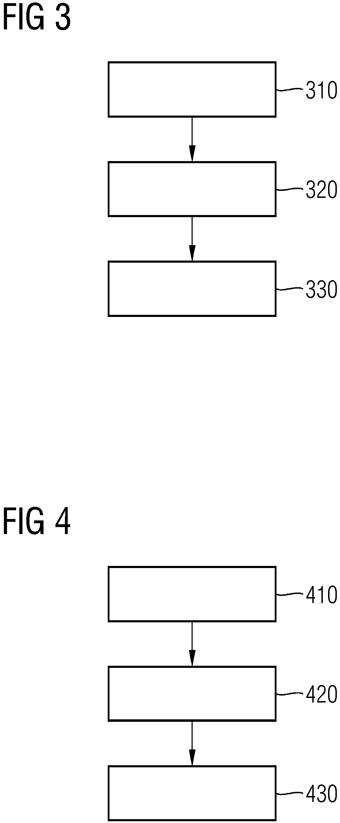

Die Fig. 3 zeigt ein weiteres Ausführungsbeispiel der Erfindung, das als Ablaufdiagramm für ein Verfahren dargestellt ist.

Das Verfahren ist vorzugsweise computerimplementiert realisiert.

Im Einzelnen wird in diesem Ausführungsbeispiel ein computerimplementiertes Verfahren zum Steuern und/oder Verarbeiten einer Ressource erläutert.

Das Verfahren umfasst einen ersten Verfahrensschritt 310 zum Registrieren einer Ressource als ein Objekt, wobei beim Registrieren eine Objektdatenstruktur für das Objekt ermittelt wird, und wobei die Objektdatenstruktur der Ressource eindeutig zugeordnet wird oder ist.

Das Verfahren umfasst einen zweiten Verfahrensschritt 320 zum Speichern der Objektdatenstruktur.

Das Verfahren umfasst einen dritten Verfahrensschritt 330 zum Steuern und/oder Verarbeiten der Ressource anhand der Objektdatenstruktur des Objektes.

Die Fig. 4 zeigt ein weiteres Ausführungsbeispiel der Erfindung, das als Ablaufdiagramm für ein Verfahren dargestellt ist.

Das Verfahren ist vorzugsweise computerimplementiert realisiert.

Im Einzelnen wird in diesem Ausführungsbeispiel ein computerimplementiertes Verfahren zum Steuern eines Gerätes erläutert.

Das Verfahren umfasst einen ersten Verfahrensschritt 410 zum Kommunizieren mit einem System, wobei das System beispielsweise ein System nach Fig. 1 oder 2 ist, und wobei beispielsweise mit einer Kommunikationsschnittstelle des Systems kommuniziert wird.

Das Verfahren umfasst einen zweiten Verfahrensschritt 420 zum Erfassen von Objektdaten über ein Gerät und/oder über eine Ressource, wobei die Objektdaten an das System übertragen werden.

Das Verfahren umfasst einen dritten Verfahrensschritt 430 zum Empfangen eines Steuersignals von dem System als Antwort auf die übertragenen Objektdaten, wobei das Steuersignal das Gerät und/oder die Ressource steuert.

Die Erfindung betrifft ein Ökosystem von Geräten, die mittels einer Blockkette oder Netzwerkapplikation miteinander autonom interagieren. Insbesondere wird mittels der Erfindung mit einer verteilten Infrastruktur (z. B. die Netzwerkapplikation) eine sicherheitsgeschützte Datenverarbeitung von Sensordaten oder Messdaten für ein Objekt realisiert. Anwendungsgebiete sind hierbei Supply-Chain-Szenarien oder industrielle Steueranwendungen von Blockketten.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8]
   Blockchain Oracles https://blockchainhub.net/blockchain-oracles/ Stand 14.03.2018

## Patentansprüche

1. System zum Steuern und/oder Verarbeiten einer Ressource aufweisend:
- ein Registrierungsmodul, wobei
- das Registrierungsmodul zum Registrieren einer Ressource als ein Objekt eingerichtet ist,
- beim Registrieren eine Objektdatenstruktur für das Objekt ermittelt wird,
- die Objektdatenstruktur der Ressource eindeutig zugeordnet ist;
- ein Speichermodul, wobei
- das Speichermodul zum Speichern der Objektdatenstruktur eingerichtet ist;
- ein Steuerungsmodul, wobei
- das Steuerungsmodul zum Steuern und/oder Verarbeiten der Ressource anhand der Objektdatenstruktur des Objektes eingerichtet ist.

2. System nach Anspruch 1, wobei
- das Registrieren mindestens einmal während einer Initialisierungsphase für eine Ressource ausgeführt wird.

3. System nach einem der vorhergehenden Ansprüche, wobei
- die Objektdatenstruktur eindeutige Merkmale der Ressource umfasst, und/oder
- die Objektdatenstruktur einen eindeutigen Identifizierer für die Ressource umfasst, der beispielsweise anhand der eindeutigen Merkmale ermittelt wird, und/oder
- die Objektdatenstruktur eine Verarbeitungskonfiguration und/oder eine Steuerungskonfiguration umfasst, und/oder
- die Objektdatenstruktur Positionsdaten umfasst, um die eindeutigen Merkmale der Ressource zu erfassen.

4. System nach einem der vorhergehenden Ansprüche, wobei
- das System ein Prüfmodul umfasst,
- das Prüfmodul dazu eingerichtet ist, ein Prüfergebnis einer Authentizität der Ressource anhand der eindeutigen Merkmale zu ermitteln,
- beispielsweise das das Steuern und/oder Verarbeiten der Ressource anhand des Prüfergebnisses durchgeführt wird.

5. System nach einem der vorhergehenden Ansprüche, wobei
- das Steuerungsmodul oder das Speichermodul eine Kommunikationsschnittstelle umfasst,
- die Kommunikationsschnittstelle dazu eingerichtet ist, Objektdaten über die Ressource in der eindeutig zugeordneten Objektdatenstruktur zu empfangen und/oder speichern.

6. System nach einem der vorhergehenden Ansprüche, wobei
- anhand der Objektdaten ein Objektzustand der Ressource ermittelt wird,
- beispielsweise die Verarbeitungskonfiguration und/oder die Steuerungskonfiguration Steuerungsprogramme umfassen, die abhängig von Objektzustand und/oder abhängig von einer Änderung des Objektzustandes ausgeführt werden,
- beispielsweise das Steuerungsmodul hierfür den Objektzustand überwacht und ggf. die Steuerungsprogramme ausführt.

7. System nach einem der vorhergehenden Ansprüche, wobei
- das Steuerungsmodul dazu eingerichtet ist, das Steuern und/oder Verarbeiten der Ressource anhand der Verarbeitungskonfiguration und/oder eine Steuerungskonfiguration zu steuern.

8. System nach einem der vorhergehenden Ansprüche, wobei
- die Objektdatenstruktur in einer Netzwerkapplikation oder in mehreren Netzwerkapplikationen gespeichert wird,
- beispielsweise die Verarbeitungskonfiguration und/oder die Steuerungskonfiguration vorgeben, welche Teile der Objektdatenstruktur in welcher Netzwerkapplikation gespeichert werden,
- beispielsweise die Verarbeitungskonfiguration und/oder die Steuerungskonfiguration eine entsprechende Netzwerkapplikation für vorgegebene Datentypen und/oder vorgegebene Nachrichtentypen vorgeben,
- beispielsweise das Speichern und/oder das Auswählen durch das Speichermodul und/oder das Steuerungsmodul erfolgt.

9. System nach einem der vorhergehenden Ansprüche, wobei
- die Objektdatenstruktur in einer Netzwerkapplikation oder in mehreren Netzwerkapplikationen gespeichert wird,
- beispielsweise die Verarbeitungskonfiguration und/oder die Steuerungskonfiguration Netzwerkapplikationsanforderungen für das Speichern in einer Netzwerkapplikation vorgeben,
- beispielsweise anhand der Netzwerkapplikationsanforderungen ein Auswählen einer entsprechende Netzwerkapplikation zum Speichern erfolgt,
- beispielsweise die Verarbeitungskonfiguration und/oder die Steuerungskonfiguration vorgeben, welche für welche Teile der Objektdatenstruktur entsprechende Netzwerkapplikationsanforderungen vorgegeben sind,
- beispielsweise das Speichern und/oder das Auswählen durch das Speichermodul und/oder das Steuerungsmodul erfolgt.

10. System nach einem der vorhergehenden Ansprüche, wobei
- das Steuerungsmodul für eine Überwachung der Ressource anhand der Objektdatenstruktur eingerichtet ist,
- beispielsweise die Überwachung der Ressource anhand von Objektdaten der Objektdatenstruktur und/oder anhand der Verarbeitungskonfiguration und/oder der Steuerungskonfiguration erfolgt,
- beispielsweise für die Überwachung ein Überwachungsprüfergebnis ermittelt wird,
- beispielsweise anhand des Überwachungsprüfergebnisses ein Steuersignal, wie ein Alarmsignal, bereitgestellt wird, wenn z. B. das Überwachungsprüfergebnis eine Überschreitung oder eine Verletzung der Verarbeitungskonfiguration und/oder der Steuerungskonfiguration angibt,
- beispielsweise anhand des Überwachungsprüfergebnisses ein Steuersignal, wie ein Steuersignal zum Verarbeiten der Ressource durch ein Gerät, bereitgestellt wird, wenn z. B. das Überwachungsprüfergebnis ein Einhalten der Verarbeitungskonfiguration und/oder der Steuerungskonfiguration angibt.

11. System nach einem der vorhergehenden Ansprüche, wobei
- das System ein Identifikationsmodul umfasst,
- das Identifikationsmodul zum Ermitteln eines Identifikationsprüfergebnisses für die Ressource eingerichtet ist,
- beispielsweise das Identifikationsprüfergebnis das zugehörige Objekt und/oder die zugehörige Objektdatenstruktur für die Ressource identifiziert,
- beispielsweise anhand des Identifikationsprüfergebnisses der Ressource Zugriffsrechte gewährt werden.

12. System nach einem der vorhergehenden Ansprüche, wobei
- das System ein Konfigurationsmodul umfasst,
- das Konfigurationsmodul zum Ermitteln der Verarbeitungskonfiguration und/oder der Steuerungskonfiguration eingerichtet ist,
- beispielsweise die Verarbeitungskonfiguration und/oder die Steuerungskonfiguration anhand von historischen Daten für die Ressource oder für andere Ressourcen ermittelt werden,
- beispielsweise die Steuerungsprogramme durch das Konfigurationsmodul anhand der ermittelten Verarbeitungskonfiguration und/oder der ermittelten Steuerungskonfiguration und/oder anhand der historischen Daten ermittelt werden.

13. Gerät umfassend:
- ein Kommunikationsmodul, wobei
- das Kommunikationsmodul dazu eingerichtet ist, mit einem System zu kommunizieren,
- das System beispielsweise eine System nach einem der Ansprüche 1 - 12 ist,
- das Gerät beispielsweise mit einer Kommunikationsschnittstelle des Systems kommuniziert;
- ein Objektdatenerfassungsmodul, wobei
- das Objektdatenerfassungsmodul dazu eingerichtet ist, Objektdaten über das Gerät und/oder über eine Ressource zu erfassen,
- die Objektdaten mittels des Kommunikationsmoduls an das System übertragen werden;
- ein Verarbeitungsmodul, wobei
- das Verarbeitungsmodul dazu eingerichtet ist, ein Steuersignal von dem System als Antwort auf die übertragenen Objektdaten zu empfangen,
- das Steuersignal das Gerät und/oder die Ressource steuert.

14. Computerimplementiertes Verfahren zum Steuern und/oder Verarbeiten einer Ressource mit folgenden Verfahrensschritten:
- Registrieren einer Ressource als ein Objekt, wobei
- beim Registrieren eine Objektdatenstruktur für das Objekt ermittelt wird,
- der Objektdatensatz der Ressource eindeutig zugeordnet ist,
- Speichern der Objektdatenstruktur;
- Steuern und/oder Verarbeiten der Ressource anhand der Objektdatenstruktur des Objektes.

15. Computerimplementiertes Verfahren zum Steuern eines Gerätes mit folgenden Verfahrensschritten
- Kommunizieren mit einem System, wobei
- das System beispielsweise ein System nach einem der Ansprüche 1 - 12 ist,
- beispielsweise mit einer Kommunikationsschnittstelle des Systems kommuniziert wird;
- Erfassen von Objektdaten über ein Gerät und/oder über eine Ressource, wobei
- die Objektdaten an das System übertragen werden;
- Empfangen eines Steuersignals von dem System als Antwort auf die übertragenen Objektdaten, wobei
- das Steuersignal das Gerät und/oder die Ressource steuert.

16. Computerprogrammprodukt mit Programmbefehlen zur Durchführung des Verfahrens nach einem der Ansprüche 14 oder 15.

17. Bereitstellungsvorrichtung für das Computerprogrammprodukt nach Anspruch 16, wobei die Bereitstellungsvorrichtung das Computerprogrammprodukt speichert und/oder bereitstellt.
